# EUROPEAN PATENT APPLICATION

(11) **EP 4 844 632 A2**
(43) Date of publication of application: **25.11.2026**
(21) Application number: 26210334.4
(22) Date of filing: 11.05.2023
(51) Int. Cl.: G06K 19/07

(54) **TEMPERATURE INDICATOR**

(30) Priority: 11.05.2022 US 202263340775 P; 14.04.2023 US 202363459302 P
(62) Document number(s) of the earlier application(s) in accordance with Art. 76 EPC: 23728528.3 / 4 522 953
(71) Applicant: Shockwatch, Inc., Dallas TX 75254 (US)
(72) Inventor: VAN NIEKERK, Johannes, Dallas, 75254 (US); MARREC, Philippe, Dallas, 75254 (US); SHIVKUMAR, Uma, Dallas, 75254 (US); SHIVKUMAR, Bagavant, Dallas, 75254 (US)
(74) Representative: Carpmaels & Ransford LLP

(57) **Abstract**

A temperature indicator includes a compound comprising an ionic fluid disposed in contact with an absorbent medium at a first location. Detection circuitry is coupled to the absorbent medium at a second location spaced apart from the first location. Communications circuitry is coupled to the detection circuitry and is configured to output a value indicating an actuation state of the temperature indicator indicated by the detection circuitry. Responsive to the temperature indicator being exposed to a temperature exceeding a temperature threshold, the compound migrates along the absorbent medium from the first location toward the second location. The detection circuitry is configured to indicate the actuation state based on a presence of the compound at the second location.

## Description

### PRIORITY INFORMATION

The present application claims priority to U.S. Provisional Application Number 63/340,775 filed on May 11, 2022, and the present application claims priority to U.S. Provisional Application Number 63/459,302 filed on April 14, 2023, each of which is incorporated by reference herein for all purposes.

### TECHNICAL FIELD

The present subject matter relates generally to temperature indicators.

### BACKGROUND

During manufacturing, storage, or transit, many types of objects need to be monitored or tracked due to the temperature sensitivity or fragility of the objects. For example, some types of objects may be susceptible to damage if exposed to certain temperatures (e.g., food or pharmaceutical items). Thus, for quality control purposes and/or the general monitoring of transportation conditions, it is desirable to determine and/or verify the environmental conditions to which the object has been exposed.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a schematic diagram illustrating an application of an embodiment of a temperature indicator according to the present disclosure;
FIG. 2 is a is a block diagram illustrating an embodiment of a temperature indicator according to the present disclosure;
FIG. 3A is a schematic diagram illustrating a top plan view of an embodiment of a temperature indicator according to the present disclosure in a non-active and non-actuated state;
FIG. 3B is a schematic diagram illustrating a side view of the temperature indicator illustrated in FIG. 3A taken from the line 3B-3B of FIG. 3A in accordance with the present disclosure;
FIG. 4A is a schematic diagram illustrating a top plan view of the embodiment of the temperature indicator illustrated in FIGS. 3A and 3B according to the present disclosure in an active and actuated state; and
FIG. 4B is a schematic diagram illustrating a side view of the temperature indicator illustrated in FIG. 4A taken from the line 4B-4B of FIG. 4A in accordance with the present disclosure.

Corresponding reference characters indicate corresponding parts throughout the several views. The exemplifications set out herein illustrate exemplary embodiments of the disclosure, and such exemplifications are not to be construed as limiting the scope of the disclosure in any manner.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The following description is provided to enable those skilled in the art to make and use the described embodiments contemplated for carrying out the disclosure. Various modifications, equivalents, variations, and alternatives, however, will remain readily apparent to those skilled in the art. Any and all such modifications, variations, equivalents, and alternatives are intended to fall within the scope of the present disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

For purposes of the description hereinafter, the terms "upper", "lower", "right", "left", "vertical", "horizontal", "top", "bottom", "lateral", "longitudinal", and derivatives thereof shall relate to the disclosure as it is oriented in the figures. However, it is to be understood that the disclosure may assume various alternative variations, except where expressly specified to the contrary. It is also to be understood that the specific devices illustrated in the attached drawings, and described in the following specification, are simply exemplary embodiments of the disclosure. Hence, specific dimensions and other physical characteristics related to the embodiments disclosed herein are not to be considered as limiting.

As used herein, the terms "first" and "second" may be used interchangeably to distinguish one component from another and are not intended to signify location or importance of the individual components.

The singular forms "a", "an", and "the" include plural references unless the context clearly dictates otherwise.

The present disclosure is generally related to a device and technique for temperature detection and indication. According to one embodiment, a temperature indicator includes an absorbent medium and a compound comprising an ionic fluid disposed within a substance. The compound contacts the absorbent medium at a first location when the temperature indicator is in an active state, and the substance is meltable at a temperature threshold. The temperature indicator also includes detection circuitry coupled to the absorbent medium at a second location spaced apart from the first location and communications circuitry coupled to the detection circuitry. The communications circuitry is configured to output a value indicating an actuation state of the temperature indicator indicated by the detection circuitry. Responsive to the temperature indicator being exposed to a temperature exceeding the temperature threshold, the compound melts, is absorbed the absorbent medium, and migrates along the absorbent medium from the first location toward the second location. The detection circuitry is configured to indicate the actuation state based on a presence of the compound at the second location. Thus, in operation, in response to the temperature indicator being exposed to a temperature exceeding the temperature threshold, the substance of the compound melts thereby enabling the compound to be absorbed by the absorbent medium. The compound migrates along or through the absorbent medium toward the second location (e.g., via capillary action or otherwise) where the detection circuitry is located. Responsive to the compound reaching or coming in contact with the detection circuitry, the ionic fluid within the compound causes a change in a level or resistance or conductivity via the detection circuitry. The change in the level of resistance or conductivity via the detection circuitry is used to indicate an actuation state of the temperature indicator. The indicator also includes a wireless communications module coupled to the detection circuitry configured to output a value indicating the actuation state of the temperature indicator. The temperature indicator further includes an activator element configured to maintain the temperature indicator in a non-active or non-reactive state until removal of the activator element from the temperature indicator.

During storage, transit, or use, many types of objects need to be monitored for temperature (i.e., cold chain) of the objects. For example, some types of objects such as food or pharmaceuticals may be susceptible to spoilage or lack of efficacy if they are subjected to temperatures that are too high for too long a time. The duration or threshold of the temperature excursion (i.e., "time-temperature" variable) is often more important than a non-duration focused or real time reading of temperature. Thus, for quality control purposes and/or the general monitoring of transportation/use conditions, it is desirable to determine and/or verify the temperature conditions to which the object has been exposed.

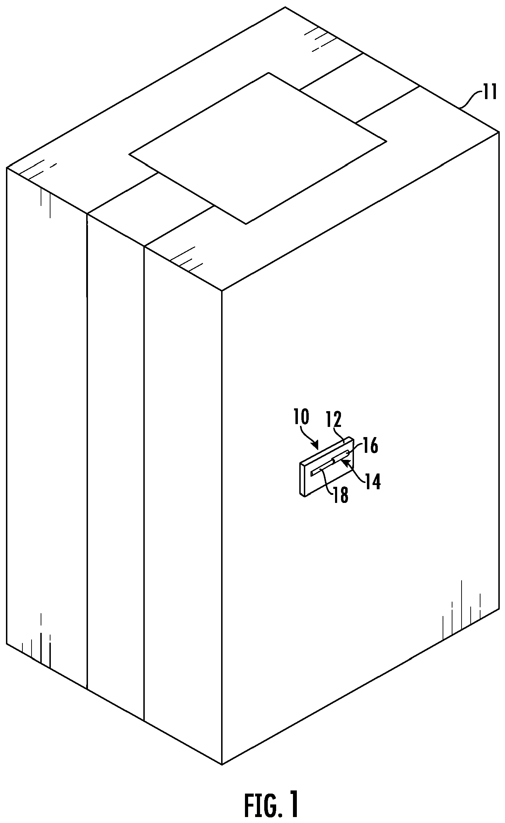

Referring now to the drawings, wherein identical numerals indicate the same elements throughout the figures, specifically FIG. 1, FIG. 1 is an exemplary diagram of a temperature indicator 10 are provided in which illustrative embodiments of the present disclosure may be implemented. FIG. 1 is a diagram illustrating a front view of temperature indicator 10. In FIG. 1, indicator 10 is a portable device configured to be affixed to or disposed within a transport container 11 containing an object (or is the object of interest itself) of which temperature events associated therewith are to be monitored. Embodiments of the temperature indicator 10 monitor whether an object has been exposed to a particular temperature or environment during manufacturing, storage and/or transport of the object. In exemplary embodiments, the temperature indicator 10 may be affixed to the transport container 11 using, for example, adhesive materials, permanent or temporary fasteners, or a variety of different types of attachment devices. The transport container 11 may include a container in which a monitored object is loosely placed or may comprise a container of the monitored object itself. It should be appreciated that FIG. 1 is only exemplary and is not intended to assert or imply any limitation with regard to the environments in which different embodiments may be implemented.

In the embodiment illustrated in FIG. 1, the temperature indicator 10 comprises a housing 12 having a temperature sensing, temperature-sensitive and/or temperature detection assembly 14 disposed therein. In the illustrated embodiment, detection assembly 14 is configured to detect and indicate temperature events relative to indicator 10 (e.g., detecting when indicator 10 (and correspondingly, a container to which indicator 10 is associated with) has been subjected to a particular environmental temperature and/or an environmental temperature for a particular time duration. In exemplary embodiments, housing 12 is configured and/or constructed from a clear or semi-opaque material having a masking label 16 located on a front side thereof or affixed thereto. In exemplary embodiments, the masking label 16 is configured having one or more apertures or "windows" 18 for providing a visual indication of temperature detection. For example, in exemplary embodiments, in response to indicator 10 being subjected to a particular temperature, detection assembly 14 causes a visual indication to be displayed within or through one or more of windows 18 to provide a visual indication that the monitored object has or may have been subjected to some level of temperature. However, it should be understood that other methods may be used to provide a visual indication that the temperature indicator 10 has been placed into an actuated state indicating that the temperature indicator 10 has experienced some level of temperature exceeding a particular temperature threshold. It should also be understood that the housing 12 may be configured and/or manufactured from other materials (e.g., opaque materials having one or more windows 18 formed therein). In exemplary embodiments, the housing 12 may be configured without the window 18. For example, as will be described in greater detail below, the temperature indicator 10 may be configured to provide visual and/or non-visual indications of whether a temperature condition or event has been experienced by the temperature indicator 10 (e.g., via the use of wireless signals).

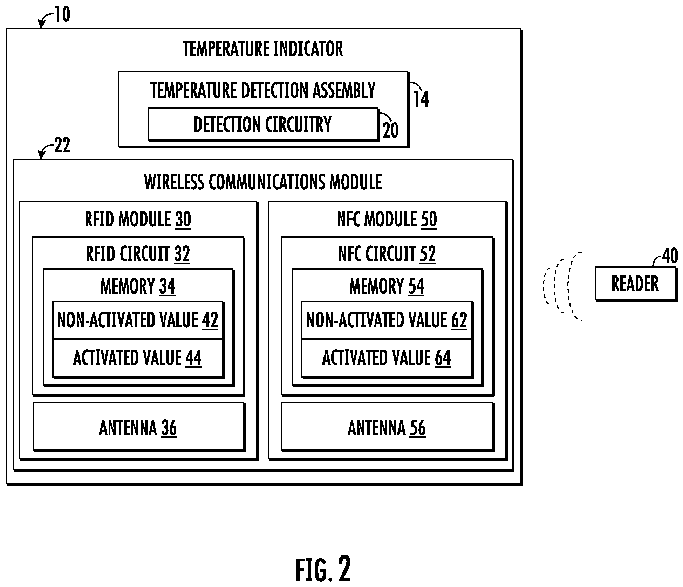

FIG. 2 is a block diagram representing and illustrating an embodiment of the temperature indicator 10 in accordance with an embodiment of the present disclosure. In FIG. 2, the temperature indicator 10 includes the temperature detection assembly 14 comprising detection circuitry 20. The temperature indicator 10 also comprises a wireless communications module 22. In exemplary embodiments, the detection circuitry 20 is electrically and/or communicatively coupled to the communications module 22. The detection circuitry 20 may comprise one or more switch elements, traces, contacts, and/or circuits that are responsive to detecting or indicating a change in an actuation status or state of the temperature indicator 10. For example, in exemplary embodiments, the detection circuitry 20 may include one or more switch elements, traces, contacts, and/or circuits that may become or form an electrically conductive path or that be become electrically non-conductive (e.g., a change in impedance or resistance, changing from an open circuit condition to a closed circuit condition, or vice versa, etc.) in response to being subjected to a temperature event (e.g., a temperature or temperature-time event exceeding some temperature-time threshold). In exemplary embodiments, the detection circuitry 20 may include one or more switch elements, traces, contacts, and/or circuits across which a resistance value may be measured to determine whether the temperature indicator 10 has been subjected to or experienced a temperature event (e.g., a temperature or temperature-time event exceeding some threshold). In exemplary embodiments, the detection circuitry 20 may be affixed (permanently or removably) to a printed circuit board and/or otherwise permanently or removably connected to electronic circuitry (e.g., such as a removable cartridge) such that, in response to receipt and/or detection of a temperature condition of a sufficient magnitude and/or exceeding a particular threshold(s), the detection circuitry 20 provides an electronic signal/indication of such event.

Wireless communications module 22 is configured to wirelessly communicate information associated with a state of the detection circuitry 20 indicating the actuation state of temperature indicator 10 (e.g., based on a state of the detection circuitry 20 and/or a value measured or detected by the detection circuitry 20). For example, in exemplary embodiments, wireless communications module 22 includes an RFID module 30. In exemplary embodiments, RFID module 30 comprises a passive RFID module 30 (e.g., a passive RFID tag) having an RFID integrated circuit (chip) or circuitry 32 (e.g., disposed on or as part of a printed circuit board, such as a RFID tag) and a memory 34, along with an antenna 36. As a passive RFID module 30, indicator 10 does not contain a battery (e.g., power is supplied by a reader 40 (e.g., an RFID reader 40)), thereby forming a battery-free temperature indicator 10. For example, when radio waves from reader 40 are encountered by module 30, antenna 36 forms a magnetic field, thereby providing power to module 30 to energize circuit 32. Once energized/activated, module 30 may output/transmit information encoded in memory 34 (e.g., using communication protocols such as near-field communication (NFC), ISO-18000-3, ISO 18000-6, UHF Gen2, ISO-15693, etc.). However, it should be understood that, in exemplary embodiments, RFID module 30 may comprise an active RFID module 30 including a power source (e.g., a battery) that may be configured to continuously, intermittently, and/or according to programmed or event triggers, broadcast or transmit certain information. One embodiment of a passive RFID tag is a flex circuit RFID in a roll form. In flex circuit RFIDs, the chip and antenna are embedded onto a thin substrate of 100 to 200 nm using, for example, polyvinyl chloride (PVC), polyethylenetherephtalate (PET), phenolics, polyesters, styrene, or paper via copper etching or hot stamping. One process for RFID manufacture is screen printing using conductive ink containing copper, nickel, or carbon. An example of a commercially available flex circuit passive RFID tag product that can come hundreds or even thousands in a roll is the SmartracTM product from Avery Dennison Corporation

It should also be understood that wireless communications module 22 may be configured for other types of wireless communication types, modes, protocols, and/or formats (e.g., short-message services (SMS), wireless data using General Packet Radio Service (GPRS)/3G/4G or through public internet via Wi-Fi, or locally with other radio-communication protocol standards such as Wi-Fi, Z-Wave, ZigBee, Bluetooth^{®}, Bluetooth^{®} low energy (BLE), LoRA, NB-IoT, SigFox, Digital Enhanced Cordless Telecommunications (DECT), or other prevalent technologies). As will be described further below, in response to receipt of a particular level and/or magnitude of a temperature event, temperature indicator 10 functions as a passive temperature sensor/indicator that can be used as part of an electronic signal or circuit. In exemplary embodiments, the temperature sensing capabilities/functions of temperature indicator 10 of the present disclosure needs no power while in the monitoring state.

In the illustrated embodiment, memory 34 includes at least two different stored and/or encoded values 42 and 44. For example, value 42 may correspond to a value outputted/transmitted by module 30 when detection circuitry 20 detects an actuated state of the temperature indicator 10, and value 44 may correspond to a value outputted/transmitted by module 30 when detection circuitry 20 detects a non-actuated state of the temperature indicator 10. As an example, the value 44 may represent an RFID tag identification (ID) number indicating a non-actuated state of the temperature indicator 10, and the RFID tag's ID number may have an additional character (e.g., "0") placed at the end thereof. Value 42 may represent the RFID ID number indicating an actuated state of the temperature indicator 10, and the RFID tag's ID number may have an additional character at the end thereof being different from the additional character carried by value 44 (e.g., "1"). In the illustrated embodiment, RFID module 30 (e.g., circuitry 32) is electrically and/or communicatively coupled to detection circuitry 20 and can detect, or is provided with data, indicating the actuation state determined or identified by the detection circuitry 20. Thus, for example, detection circuitry 20 may initially be in or detect a non-actuated state of the temperature indicator 10. Thus, if energized/activated, module 30 would transmit value 44 to reader 40. If the temperature indicator 10 were to be subject to a temperature event, a change in the state of the detection circuitry 20 or a measured or detected value (or a change in a measured or detected value) would result in the detection circuitry 20 indicating an actuated state of the temperature indicator 10. Thus, if now energized (e.g., after the temperature event), module 30 would instead transmit value 42 to reader 40. Thus, embodiments of the present disclosure enable indicator 10 to monitor sensitive products/objects to which it is attached for potential damage caused by temperature variations using electronic indicators (e.g., RFID or other types of wireless readers) while temperature indicator 10 does not contain or require any internal power source (e.g., a battery).

In exemplary embodiments, additionally or alternatively to the RFID module 30, wireless communications module 22 includes a NFC module 50. Similar to the RFID module 30, in exemplary embodiments, the NFC module 50 comprises a passive NFC module 50 having a NFC integrated circuit (chip) or circuitry 52 (e.g., disposed on or as part of a printed circuit board, such as a NFC tag) and a memory 54, along with an antenna 56. As a passive NFC module 50, indicator 10 does not contain a battery (e.g., power is supplied by the reader 40), thereby forming a battery-free temperature indicator 10. For example, when radio waves from reader 40 are encountered by NFC module 50, antenna 56 forms a magnetic field, thereby providing power to NFC module 50 to energize circuit 52. Once energized/activated, NFC module 50 may output/transmit information encoded in memory 54. In the illustrated embodiment, memory 54 includes at least two different stored and/or encoded values 62 and 64. For example, value 62 may correspond to a value outputted/transmitted by NFC module 50 when detection circuitry 20 detects or indicates an actuated state of the temperature indicator 10, and value 64 may correspond to a value outputted/transmitted by NFC module 50 when detection circuitry 20 detects or indicates an actuated state of the temperature indicator 10.

The present disclosure may include computer program instructions at any possible technical detail level of integration (e.g., stored in a computer readable storage medium (or media) (e.g., memory 34 and/or 54) for causing a processor to carry out aspects of the present disclosure. Computer readable program instructions described herein can be downloaded to respective computing/processing devices (e.g., communications module 22, RFID module 30, and/or NFC module 50). Computer readable program instructions for carrying out operations of the present disclosure may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages. In exemplary embodiments, electronic circuitry (e.g., circuitry 32 and/or 52) including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present disclosure. Aspects of the present disclosure are described herein with reference to illustrations and/or block diagrams of methods and/or apparatus according to embodiments of the disclosure. It will be understood that each block of the illustrations and/or block diagrams, and combinations of blocks in the illustrations and/or block diagrams, may represent a module, segment, or portion of code, can be implemented by computer readable program instructions. These computer readable program instructions may be provided to a processor or other programmable data processing apparatus to produce a machine, such that the instructions, which execute via the processor, create means for implementing the functions/acts specified in the illustrations and/or block diagram block or blocks. These computer readable program instructions may also be stored in a computer readable storage medium that can direct a computing device, a programmable data processing apparatus, and/or other devices to function in a particular manner, such that the computer readable storage medium having instructions stored therein comprises an article of manufacture including instructions which implement aspects of the function/act specified in the illustrations and/or block diagram block or blocks. Detection circuitry 20, wireless communications module 22, RFID module 30, and/or NFC module 50 may be implemented in any suitable manner using known techniques that may be hardware-based, software-based, or some combination of both. For example, detection circuitry 20, wireless communications module 22, RFID module 30, and/or NFC module 50 may comprise software, logic and/or executable code for performing various functions as described herein (e.g., residing as software and/or an algorithm running on a processor unit, hardware logic residing in a processor or other type of logic chip, centralized in a single integrated circuit or distributed among different chips in a data processing system). As will be appreciated by one skilled in the art, aspects of the present disclosure may be embodied as a system, method or computer program product. Accordingly, aspects of the present disclosure may take the form of a hardware embodiment, a software embodiment (including firmware, resident software, micro-code, etc.) or an embodiment combining software and hardware aspects that may all generally be referred to herein as a "circuit," "module" or "system."

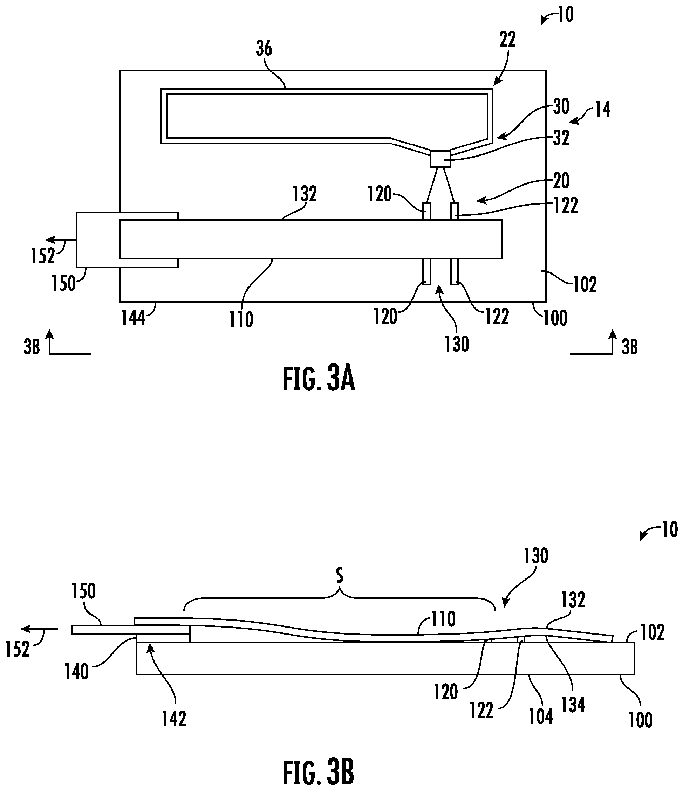

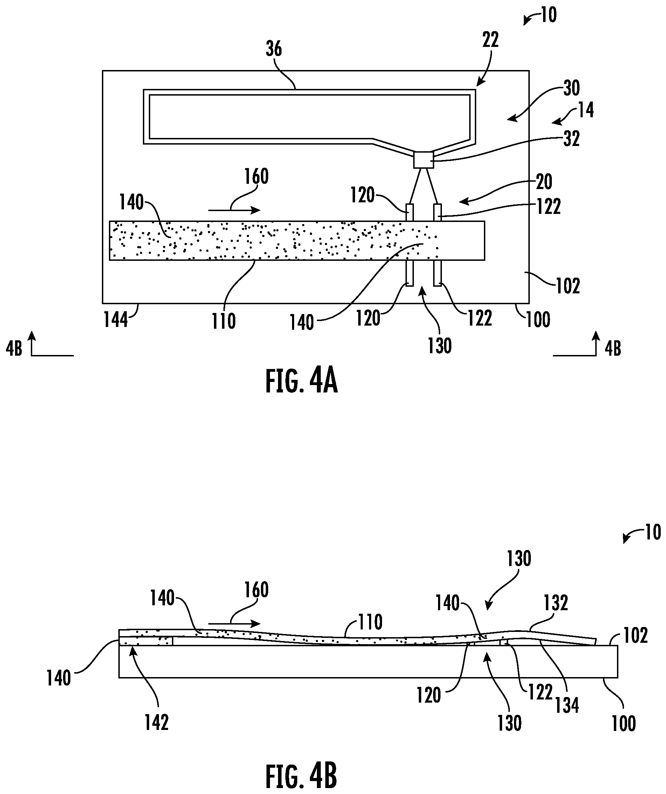

Referring FIGS. 3A-4B, FIG. 3A is schematic top view of an exemplary embodiment of the temperature indicator 10 in accordance with the present disclosure in a non-active and non-actuated state, FIG. 3B is a schematic side view of the exemplary temperature indicator 10 of FIG. 3A in accordance with the present disclosure in a non-active and non-actuated state, FIG. 4A is schematic top view of an exemplary embodiment of the temperature indicator 10 of FIGS. 3A and 3B in accordance with the present disclosure in an active and actuated state, and FIG. 4B is a schematic side view of the exemplary temperature indicator 10 of FIGS. 3A, 3B, and 4A in accordance with the present disclosure in an active and actuated state. In FIGS. 3A-4B, the temperature indicator 10 is depicted without the housing 12 (FIG. 1) for ease of description and illustration.

In the illustrated embodiment, the temperature indicator 10 comprises substrate 100 onto which the detection assembly 14 is secured. For example, in the illustrated embodiment, the detection circuitry 20 and the communications module 22 are secured, bonded, or otherwise affixed to a top side 102 of the substrate 100. A bottom side 104 of the substrate 100 may be secured to an interior portion of the housing 12 (FIG. 1) or itself may form part of the housing 12 (FIG. 1). In exemplary embodiments, the substate 100 is configured to be non-absorbent at least in certain areas or portions thereof. For example, in exemplary embodiments, the substrate 100 comprises a paper base layer with a plastic moisture barrier or coating on the top side 102 thereof. The moisture barrier or coating may cover the entire paper base layer or be applied only on the top side 102 of the substrate 100 (or even in localized areas of the top side 102). However, it should be understood that the substrate 100 may be formed of other non-absorbent materials.

In the illustrated embodiment, the temperature indicator 10 comprises an absorbent medium 110 disposed on or otherwise secured to the top side 102 of the substrate 100. In exemplary embodiments, the absorbent medium 110 comprises chromatography paper or filter paper; however, it should be understood that other types of absorbent materials may be used for the absorbent medium 110. In exemplary embodiments, the absorbent medium 110 comprises a porous or fibrous material (or a micromaterials) that provides a constant rate of capillary migration of a fluid therethrough (e.g., similar to a sponge). In the illustrated embodiment, the absorbent medium 110 is secured to the substrate 100 using heat bonding techniques; however, it should be understood that the absorbent medium 110 may be secured to the substrate 100 using other techniques.

In exemplary embodiments, the detection circuitry 20 comprises conductive terminals 120 and 122. In the illustrated embodiment, the conductive terminals 120 and 122 are disposed on and/or otherwise coupled to the top side 102 of the substrate 100. Further, the conductive terminals 120 and 122 are disposed in contact or coupled to the absorbent medium 110 at or near a location 130 relative to the absorbent medium 110. In the illustrated embodiment, the conductive terminals 120 and 122 are disposed between the absorbent medium 110 and the top side 102 of the substrate 100. However, it should be understood that the conductive terminals 120 and 122 may additionally or alternatively be coupled to a top side 132 of the absorbent medium 110. In exemplary embodiments, the conductive terminal 120 is disposed in a spaced apart relationship relative to the conductive terminal 122 such that the absorbent medium 110 forms a bridge extending between the conductive terminals 120 and 122. In other words, a portion of the absorbent medium 110 in contact with the conductive terminal 120 is located spaced apart from another portion of the absorbent medium 110 in contact with the conductive terminal 122. In the illustrated embodiment, the absorbent medium 110 is depicted being spaced apart from the top side 102 of the substrate 100 in the location 130 extending between the conductive terminals 120 and 122 (e.g., forming a gap between a bottom side 134 of the absorbent medium 110 and the top side 102 of the substrate 100); however it should be understood that the bottom side 134 of the absorbent medium 110 may also be in contact with the top side 102 of the substrate. In exemplary embodiments, the conductive terminals 120 and 122 may be formed of copper or aluminum traces or may be formed of other electrically conductive materials.

In the illustrated embodiment, the detection circuitry 20 is electrically and/or communicatively coupled to the communications module 22. For example, in the illustrated embodiment, for ease of description and illustration, the communications module 22 is depicted comprising the RFID module 30 and corresponding RFID circuit 32 and antenna 36; however, it should be understood that, additionally or alternatively, the communications module 22 may comprise the NFC module 50 (FIG. 3) and corresponding NFC circuit 52 (FIG. 3) and antenna 56 (FIG. 3). Thus, in exemplary embodiments, the conductive terminals 120 and 122 are electrically coupled to the RFID circuit 32. As will be described further below, the detection circuitry 20, via the conductive terminals 120 and 122, indicate an actuation state of the temperature indicator 10 based on a resistance or resistance measurement level/reading between the conductive terminals 120 and 122 measured across the absorbent medium 110 extending between the conductive terminals 120 and 122. In exemplary embodiments, the RFID circuit 32 may function as a multimeter, for example, to measure or otherwise detect a resistance between the conductive terminals 120 and 122 measured across the absorbent medium 110 extending between the conductive terminals 120 and 122. In the illustrated embodiment, the RFID circuit 32 (or RFID chip) is electrically coupled to the antenna 36. In at least one embodiment, the RFID circuit 32 may comprise an RFID chip sold by NXP under part number SL3S1013. In at least another embodiment, the NFC circuit (FIG. 3) may comprise a NFC chip manufactured by EM Microelectronics of Marin, Switzerland, under part number EM4425.

In exemplary embodiments, the temperature indicator 10 comprises a compound 140 disposed on the top side 102 of the substrate 100 at a location 142 relative to the absorbent medium 110. In exemplary embodiments, the location 142 is spaced apart from the location 130 such there is a span S of the absorbent medium 110 extending from the location 130 to the location 142. In the illustrated embodiment, the absorbent medium 110 extends in a longitudinal direction extending proximate a side 144 of the substrate 100. In the illustrated embodiment, as depicted in FIGS. 3A and 3B, the temperature indicator 10 comprises an activator element 150 that maintains the temperature indicator 10 in a non-active (or non-reactive) state until removed from the temperature indicator 10 (i.e., unable to transition from a non-actuated state to an actuated state where the non-actuated state refers to a state of the temperature indicator prior to experiencing or being subject to a temperature event above a certain threshold and the actuated state refers to a state of the temperature indicator 10 having been subjected to a temperature event at or above the threshold). For example, during shipment of the temperature indicator 10 to an end user (or otherwise), the temperature indicator 10 may be subjected to a temperature event that would be detected the temperature indicator 10 and cause the temperature indicator 10 to transition to an actuated state (i.e., indicating the receipt of a temperature event). The activator element 150 prevents the temperature indicator 10 from transitioning from a non-actuated state to an actuated state even if a temperature event is experienced by the temperature indicator 10. Removal of the activator element 150 from the temperature indicator 10 places the temperature indicator 10 in an active state or sensing mode (i.e., capable of detecting a temperature event and transitioning to an actuated state to indicate the receipt of the temperature event). For example, in exemplary embodiments, the activator element 150 comprises a thin plastic material disposed between the compound 140 and the absorbent medium 110 at the location 142, thereby preventing contact between the compound 140 and the absorbent medium 110. The activator element 150 can be pulled out or displaced from between the compound 140 and the absorbent medium 110 in the direction 152 (e.g., resulting from a force being applied thereto in the direction 152 by an end user), which would then place the temperature indicator 10 in an active state or sensing state such that the compound 140 is in contact with the absorbent medium 110 at the location 142 (FIGS. 4A and 4B). Although not explicitly depicted in FIGS. 3A-4B, in exemplary embodiments, the housing 12 (FIG. 1) of the temperature indicator 10 may comprise an upper wall or member that is secured to the substrate 100 (or a bottom wall of the housing 12 (FIG. 1) that causes a compressive force to be applied between the absorbent medium 110 and the compound 140 such that, responsive to removal of the activator element 150, the compressive force causes the absorbent medium 110 to be placed in contact with the compound 140 at the location 142 (FIGS. 4A and 4B). In exemplary embodiments, a portion of the activator element 150 may extend beyond an exterior of the housing 12 (FIG. 1) (e.g., extending through an opening or slit formed in an exterior wall of the housing (FIG. 1)) to enable an end user of the temperature indicator 10 to grasp and remove the activator element 150 from the temperature indicator 10, thereby placing the temperature indicator 10 in an active or sensing state.

In exemplary embodiments, the compound 140 comprises a mixture of a meltable substance and an ionic fluid. The meltable substance comprises a substance with a melting point at a temperature of interest (e.g., a desired actuation temperature for the temperature indicator 10). Such a meltable substance may be found in a product identified as WarmMark available from SpotSee of Dallas, TX. The ionic fluid comprises a fluid with conductive properties that is combinable into the meltable substance. For example, in exemplary embodiments, the ionic fluid comprises a substance that enhances or initiates electrical conduction. In exemplary embodiments, the compound 140 is disposed on the top side 102 of the substrate in the location 142 and adheres to the top side 102 of the substrate 100 in the location 142. For example, the meltable substance may comprise material properties that cause the compound 140 to adhere to the top side 102 of the substrate 100. It should also be understood that the compound 140 may also reside within a reservoir or other type of holding element (not shown) to retain the compound 140 at the location 142. In other exemplary embodiments, a portion of the material used for the absorbent medium 110 may be saturated with the compound 140 and, after solidifying, placed in the location 142 between the activator element 150 and the top side 102 of the substrate 100. In operation, before the temperature indicator 10 has been exposed to a temperature exceeding a particular temperature threshold (e.g., the temperature causing the meltable substance to melt), the compound 140 remains in a solid state and, therefore, is not absorbed into the absorbent medium 110.

Referring to FIGS. 4A and 4B, in exemplary embodiments, the ionic fluid is miscible in the meltable substance such that the compound 140 will migrate (e.g., via capillary action) through and/or along the absorbent medium 110 from the location 142 toward the location 130 (e.g., in the direction 160) in response to the temperature indicator 10 being subjected to a temperature event (e.g., a temperature exceeding a melting temperature of the meltable substance of the compound 140). For example, in response to the temperature indicator 10 being subjected to a temperature event exceeding the melting temperature of the meltable substance of the compound 140, the compound 140 will melt and will be absorbed by the absorbent medium 110 and migrate from the location 142 toward the location 130. After a period of time of temperature excursion exceeding the melting temperature of the meltable substance of the compound 140, the compound 140 within the absorbent medium 110 will reach the conductive terminals 120 and 122 and extend within the absorbent medium 110 from the conductive terminal 120 to the conductive terminal 122. The conductive properties of the ionic fluid within the compound 140 changes a level of resistance between the conductive terminals 120 and 122 measured across the absorbent medium 110. For example, in exemplary embodiments, the presence of the compound 140 within the absorbent medium 110 extending between and contacting each of the conductive terminals 120 and 122 causes a resistance between the conductive terminals 120 and 122 to decrease compared to a resistance between the conductive terminals 120 and 122 measured across the absorbent medium 110 without the presence of the ionic fluid in the absorbent medium 110 between the conductive terminals 120 and 122.

Thus, in operation, when the compound 140 is not in contact with the conductive terminals 120 and 122, a higher resistance would be measured or indicated between the conductive terminals 120 and 122 than when the compound 140 is contacting the conductive terminals 120 and 122. Accordingly, when the compound 140 is not in contact with the conductive terminals 120 and 122 and the communications module 22 is energized, the higher resistance measured or indicated between the conductive terminals (e.g., read or determined by the RFID circuit 32 and/or NFC circuit 52 (FIG. 3)) is an indication of a non-actuated state of the temperature indicator 10. Additionally, when the compound 140 is in contact with the conductive terminals 120 and 122 and the communications module 22 is energized, the lower resistance measured or indicated between the conductive terminals (e.g., read or determined by the RFID circuit 32 and/or NFC circuit 52 (FIG. 3)) is an indication of an actuated state of the temperature indicator 10. In exemplary embodiments, the compound 140 may also comprise a dye to enable or enhance the visibility of the compound at the location 130 (e.g., via a window 18 (FIG. 1)).

In exemplary embodiments, the temperature indicator 10 can be configured corresponding to a desired time-temperature threshold of actuation. For example, a distance between the location 142 and the location 130 may be varied, different materials may be used for the absorbent medium 110 resulting in different rates of capillary migration of the compound 140 through the absorbent medium 110, the meltable substance of the compound 140 may be changed to accommodate a different melting temperature of the meltable substance, the ionic fluid of the compound 140 may be changed, etc., or any combination of these factors.

In one exemplary embodiment, myristonitrile and 1-butyl-3-methylimidazolium tetrafluoroborate (BMI.BF4) were used as the ionic fliuid for the compound 140. A mixture of 20% BMI.BF4 was prepared by dissolving 20 g of BMI.BF4 in 80g of myristonitrile. A 5 cm x 1 cm filter paper strip was immersed in the solution. Electrodes from a multimeter were connected at the top of the paper. The solution was allowed to rise at 17°C by capillary action. When the solution came in contact with the electrodes of the multimeter, a fall in resistance was recorded on the meter from at least 20 megaohms to below 2 megaohms.

In another example, myristonitrile and 1-methyl-3-octylimidazolium hexafluorophosphate (OMIM PF6) were used for the ionic fluid for the compound 140. A mixture of 20% OMIM PF6 was prepared by dissolving 20 g of OMIM PF6 in 80g of myristonitrile. A 5 cm x 1 cm filter paper strip was immersed in the solution. Electrodes from an ohmmeter were connected at the top of the paper. The solution was allowed to rise at 18°C by capillary action. When the solution came in contact with the electrodes, a fall in resistance was recorded on the meter from at least 20 megaohms to below 2 megaohms.

Thus, embodiments of the present disclosure provide a temperature indicator utilizing a mixture or compound comprising an ionic fluid combined with a meltable substance such that upon the compound reaching a temperature threshold causing a melting of the meltable substance, the compound is absorbed into an absorbent medium and begins migrating along the absorbent medium (e.g., via capillary action). Responsive to the compound reaching a pair of conductive terminals disposed in contact with the absorbent medium, the ionic fluid within the compound changes a level of resistance between the conductive terminals measurable across the absorbent medium. The resistance level measurable between the conductive terminals across the absorbent medium provides an indication of actuation status of the temperature indicator.

Although specific features of various embodiments may be shown in some drawings and not in others, this is for convenience only. In accordance with the principles of the present disclosure, any feature of a drawing may be referenced and/or claimed in combination with any feature of any other drawing.

This written description uses examples to disclose the disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

While this disclosure has been described as having exemplary designs, the present disclosure can be further modified within the scope of this disclosure. This application is therefore intended to cover any variations, uses, or adaptations of the disclosure using its general principles. Further, this application is intended to cover such departures from the present disclosure as come within known or customary practice in the art to which this disclosure pertains and which fall within the limits of the appended claims.
The disclosure includes the following embodiments:
1. A temperature indicator, comprising:
   an absorbent medium;
   a compound comprising an ionic fluid disposed within a substance, the compound contacting the absorbent medium at a first location when the temperature indicator is in an active state, the substance meltable at a temperature threshold;
   detection circuitry coupled to the absorbent medium at a second location spaced apart from the first location; and
   communications circuitry coupled to the detection circuitry, wherein the communications circuitry is configured to output a value indicating an actuation state of the temperature indicator indicated by the detection circuitry; and
   wherein, responsive to the temperature indicator being exposed to a temperature exceeding the temperature threshold, the compound migrates along the absorbent medium from the first location toward the second location, and wherein the detection circuitry is configured to indicate the actuation state based on a presence of the compound at the second location.
2. The temperature indicator of Embodiment 1, further comprising an activator element configured to maintain the temperature indicator in a non-active state.
3. The temperature indicator of Embodiment 2, wherein removal of the activator element places the temperature indicator in the active state.
4. The temperature indicator of Embodiment 2, wherein the activator element comprises:
   a first portion disposed between the compound and the absorbent medium; and
   a second portion configured to receive a force applied thereto to displace the first portion from being located between the compound and the absorbent medium.
5. The temperature indicator of Embodiment 1, wherein the absorbent medium comprises a chromatography medium.
6. The temperature indicator of Embodiment 1, wherein the detection circuitry comprises a first conductive terminal spaced apart from a second conductive terminal, the first and second conductive terminals coupled to the absorbent medium.
7. The temperature indicator of Embodiment 6, wherein the detection circuitry is configured to determine a resistance between the first and second conductive terminals to determine the actuation state.
8. A temperature indicator, comprising:
   an absorbent medium;
   a compound comprising an ionic fluid disposed in contact with the absorbent medium at a first location;
   detection circuitry comprising first and second conductive terminals spaced apart from each other and coupled to the absorbent medium spaced apart from the first location, the detection circuitry configured to indicate an actuation state of the temperature indicator based on a resistance measured between the first and second conductive terminals; and
   communications circuitry coupled to the detection circuitry, wherein the communications circuitry is configured to output a value indicating the actuation state indicated by the detection circuitry; and
   wherein, responsive to the temperature indicator being exposed to a temperature exceeding a temperature threshold, the compound migrates along the absorbent medium from the first location toward the first and second conductive terminals, the compound affecting the resistance in response to the compound contacting the first and second conductive terminals.
9. The temperature indicator of Embodiment 8, further comprising an activator element configured to maintain the temperature indicator in a non-active state.
10. The temperature indicator of Embodiment 9, wherein removal of the activator element places the temperature indicator in an active state where the compound is in contact with the absorbent medium.
11. The temperature indicator of Embodiment 9, wherein the activator element comprises:
   a first portion disposed between the compound and the absorbent medium in the non-active state; and
   a second portion configured to receive a force applied thereto to displace the first portion from being located between the compound and the absorbent medium.
12. The temperature indicator of Embodiment 8, wherein the absorbent medium comprises a chromatography medium.
13. The temperature indicator of Embodiment 8, wherein the compound causes a decrease in the resistance in response to the compound contacting the first and second conductive terminals.
14. The temperature indicator of Embodiment 8, wherein the communications circuitry comprises at least one of a radio-frequency identification (RFID) module or a near-field communication (NFC) module.
15. A temperature indicator, comprising:
   an absorbent medium;
   a compound comprising an ionic fluid disposed in contact with the absorbent medium at a first location;
   detection circuitry coupled to the absorbent medium spaced apart from the first location, the detection circuitry configured to indicate an actuated state of the temperature indicator; and
   communications circuitry coupled to the detection circuitry, wherein the communications circuitry is configured to output a value indicating the actuated state indicated by the detection circuitry; and
   wherein, responsive to the temperature indicator being exposed to a temperature exceeding a temperature threshold, the compound migrates along the absorbent medium from the first location toward the detection circuitry, the detection circuitry indicating the actuated state in response to the compound being in contact with the detection circuitry.
16. The temperature indicator of Embodiment 15, further comprising an activator element removable from between the compound and the absorbent medium to place the temperature indicator in an active state where the compound is disposed in contact with the absorbent medium.
17. The temperature indicator of Embodiment 15, wherein the absorbent medium comprises a chromatography medium.
18. The temperature indicator of Embodiment 15, wherein the detection circuitry comprises a first conductive terminal spaced apart from a second conductive terminal, the first and second conductive terminals coupled to the absorbent medium.
19. The temperature indicator of Embodiment 18, wherein the detection circuitry is configured to measure a resistance between the first and second conductive terminals.
20. The temperature indicator of Embodiment 19, wherein the compound causes a reduction in the resistance when in contact with the first and second conductive terminals.

## Claims

1. A temperature indicator, comprising:
a substrate;
an absorbent medium disposed on the substrate;
a compound comprising an ionic fluid disposed within a substance, the compound contacting the absorbent medium at a first location when the temperature indicator is in an active state, the substance meltable at a temperature threshold;
detection circuitry coupled to the absorbent medium at a second location spaced apart from the first location; and
communications circuitry coupled to the detection circuitry, wherein the communications circuitry is configured to output an actuation state of the temperature indicator based on the detection circuitry; and
wherein, responsive to the temperature indicator being exposed to a temperature exceeding the temperature threshold, the compound migrates along the absorbent medium, and wherein the detection circuitry is configured to detect the actuation state based on an increase in conductivity measured across the absorbent medium caused by the compound.

2. The temperature indicator of Claim 1, further comprising an activator element configured to maintain the temperature indicator in a non-active state.

3. The temperature indicator of Claim 2, wherein removal of the activator element places the temperature indicator in the active state.

4. The temperature indicator of Claim 2, wherein the activator element comprises:
a first portion disposed between the compound and the absorbent medium; and
a second portion configured to receive a force applied thereto to displace the first portion from being located between the compound and the absorbent medium.

5. The temperature indicator of Claim 1, wherein the absorbent medium comprises a chromatography medium.

6. The temperature indicator of Claim 1, wherein the detection circuitry comprises a first conductive terminal spaced apart from a second conductive terminal, the first and second conductive terminals coupled to the absorbent medium.

7. The temperature indicator of Claim 1, wherein the detection circuitry comprises first and second conductive terminals spaced apart from each other in a first direction and coupled to the absorbent medium spaced apart from the first location in the first direction.

8. The temperature indicator of Claim 1, wherein the compound comprises 1-butyl-3-methylimidazolium tetrafluoroborate or 1-methyl-3-octylimidazolium hexafluorophosphate.

9. The temperature indicator of Claim 1, wherein the communications circuitry comprises at least one of a radio-frequency identification (RFID) module or a near-field communication (NFC) module.

10. The temperature indicator of Claim 1, wherein the absorbent medium is saturated with the compound in a non-actuated state at the first location.

11. The temperature indicator of Claim 10, wherein the compound is adhered to the absorbent medium at the first location in the non-actuated state.

12. The temperature indicator of Claim 1, wherein, in a non-unactuated state of the temperature indicator, the detection circuitry detects a first resistance measured across the absorbent medium, and responsive to the temperature indicator being exposed to the temperature exceeding a temperature threshold, the compound migrates along the absorbent medium from the first location toward the detection circuitry, the detection circuitry detecting a second resistance measured across the absorbent medium less than the first resistance indicating an actuated state of the temperature indicator.

13. The temperature indicator of Claim 1, wherein the absorbent medium comprises filter paper.

14. The temperature indicator of Claim 1, wherein at least a portion of the substrate is non-absorbent.

15. The temperature indicator of Claim 1, wherein the detection circuitry comprises a pair of conductive terminals spaced apart from each other and located between the absorbent medium and the substrate.
